# FASCICULE DE BREVET EUROPEEN

(11) **EP 2 552 712 B1**
(45) Date de publication et mention de la délivrance du brevet: **15.10.2014**
(21) Numéro de dépôt: 11710792.0
(22) Date de dépôt: 29.03.2011
(51) Int. Cl.: B60C 1/00, C08L 9/06, C08L 31/04, C08K 5/01

(54) **PNEUMATIQUE DONT LA BANDE DE ROULEMENT COMPORTE UNE COMPOSITION DE CAOUTCHOUC COMPRENANT UNE RESINE POLY(VINYLESTER).**
REIFEN MIT REIFENLAUFFLÄCHE BESTEND AUS KAUTSCHUKZUSAMMENSETZUNG WELCHE EIN POLY(VINYLESTER) HARZ BEINHALTET
TIRE WITH TREAD COMPOSITION COMPRISING A RUBBER COMPOSITION COMPRISING POLY(VINYLESTER) RESIN

(30) Priorité: 31.03.2010 FR 1052418
(43) Date de publication de la demande: 06.02.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LOPITAUX, Garance, F-03330 Valignat (FR); VASSEUR, Didier, F-63100 Clermont-Ferrand (FR)
(74) Mandataire: Ribière, Joel
(86) Numéro de dépôt international: PCT/EP2011/054821
(87) Numéro de publication internationale: WO 2011/120966

(56) Documents cités:
- EP-A1- 0 940 435
- EP-A2- 2 002 993
- FR-A1- 2 923 833
- US-A- 5 837 076
- DATABASE WPI Week 200834 Thomson Scientific, London, GB; AN 2008-E84982 XP002600273, & CN 101 077 968 A (YU F) 28 novembre 2007 (2007-11-28)

## Description

La présente invention est relative aux bandes de roulement de pneumatiques et aux compositions de caoutchouc à base d'élastomère diénique et d'une résine, utilisables pour la fabrication de telles bandes de roulement de pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" *(Highly Dispersible Silica),* capables de rivaliser, du point de vue du pouvoir renforçant, avec les noirs de carbone conventionnels de grade pneumatique.

L'amélioration des propriétés d'adhérence des pneumatiques sur route mouillée reste cependant une préoccupation constante des concepteurs de pneumatiques.

Au cours de leurs recherches, les Demanderesses ont découvert un pneumatique dont la bande de roulement comporte une composition de caoutchouc comprenant au moins un élastomère diénique et une résine spécifique, qui présente une adhérence sur sol mouillé améliorée.

Ainsi, un premier objet de l'invention concerne un pneumatique dont la bande de roulement comporte une composition de caoutchouc comprenant au moins un élastomère diénique, une résine poly(vinylester) dont la température de transition vitreuse (Tg) est inférieure à 0°C, et une charge renforçante.

Les pneumatiques de l'invention sont particulièrement destinés à équiper des véhicules à moteur de type tourisme, SUV (*"Sport Utility Vehicles"*)*,* deux roues (notamment motos), avions, comme des véhicules industriels choisis parmi camionnettes et "Poids-lourd" c'est-à-dire métro, bus, engins de transport routier (camions, tracteurs, remorques), véhicules hors-la-route tels qu'engins agricoles ou de génie civil, autres véhicules de transport ou de manutention.

L'invention ainsi que ses avantages seront aisément compris à la lumière de la description et des exemples de réalisation qui suivent.

### 1 - MESURES ET TESTS UTILISES

Les compositions de caoutchouc des bandes de roulements des pneumatiques sont caractérisées avant et après cuisson, comme indiqué ci-après.

### I.1 - Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, MPa) à 10% d'allongement (noté MA10) et à 100% d'allongement (noté MA100). On mesure également les allongements à la rupture (noté AR, en %). Toutes ces mesures de traction sont effectuées dans les conditions normales de température (23 ± 2°C) et d'hygrométrie (50 ± 5% d'humidité relative), selon la norme française NF T 40-101 (décembre 1979).

### I.3 - Dureté shore A

La dureté shore A des compositions après cuisson est appréciée conformément à la norme ASTM D 2240-86.

### I.4 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température. On enregistre la valeur de tan(δ) observée à 0°C (soit tan(δ)_{0°C}).

On rappelle que, de manière bien connue de l'homme du métier, la valeur de tan(δ) à 0°C est représentative du potentiel d'adhérence sur sol mouillé : plus tan(δ) à 0°C est élevée, meilleure est l'adhérence.

### II - CONDITIONS DE REALISATION DE L'INVENTION

Le pneumatique selon l'invention a donc pour caractéristiques essentielles que sa bande de roulement comporte une composition de caoutchouc comprenant au moins un élastomère diénique, une résine poly(vinylester) et une charge renforçante, composants qui sont décrits en détail ci-après.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1 - Elastomère diénique

La bande de roulement du pneumatique selon l'invention comporte une composition de caoutchouc qui a pour première caractéristique essentielle de comporter au moins un élastomère diénique.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre -5°C et - 60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions peuvent contenir un seul élastomère diénique ou un mélange de plusieurs élastomères diéniques.

### II.2 - Résine poly(vinylester)

La bande de roulement du pneumatique selon l'invention comporte au moins une résine poly(vinylester) dont la Tg est inférieure à 0°C.

La Tg est mesurée de manière connue par DSC (Differential Scanning Calorimetry), selon la norme ASTM D3418 (1999).

Le taux de résine poly(vinylester) est de préférence compris entre 5 et 50 pce, et plus préférentiellement entre 10 et 40 pce.

La résine poly(vinylester) peut être préparée selon toute méthode de préparation connue de l'homme de l'art, c'est-à-dire par polymérisation en masse, en suspension, en solution dans un solvant organique ou encore en émulsion. La masse moléculaire de la résine poly(vinylester) peut être contrôlée par toute méthode connue de l'homme de l'art, telle que l'ajout d'un agent régulateur de longueur de chaîne, par la concentration du milieu réactionnel en monomère, par la concentration en amorceur radicalaire et par la température de polymérisation.

La résine poly(vinylester) peut être notamment préparée par estérification d'une résine poly(vinyl alcool) ou par transestérification d'une résine poly(vinylester) ; ces réactions sont généralement réalisées en solution dans un solvant polaire ou apolaire, en présence d'un catalyseur acide ou basique. Elle peut être également préparée de manière connue par polymérisation en solution du ou des monomères utilisés (par exemple vinylhexanoate et vinylacetate dans les exemples qui suivent) dans un solvant organique avec un amorceur radicalaire.

La résine poly(vinylester) peut être un homopolymère de monomère d'ester de vinyle, de formule R-C(=O)O-CH=CH₂, où R est un radical alkyle ayant plus de 3 atomes de carbone, préférentiellement de 4 à 20 atomes de carbone.

La résine de poly(vinylester) peut être également un copolymère de plusieurs monomères d'ester de vinyle, de formule R-C(=O)O-CH=CH₂, dont au moins un des monomères d'ester de vinyle comporte un radical alkyle R ayant plus de 3 atomes de carbone, préférentiellement de 4 à 20 atomes de carbone.

En particulier, le monomère ester de vinyle dérive des acides propionique, butyrique, caproïque, 2-éthylhexanoïque, octanoïque, laurique, pivalique, stéarique ou linoléique. Le monomère ester de vinyle peut également dériver des acides ramifiés en α de la fonction acide carboxylique et possédant 5 à 11 atomes de carbone, tels que les monomères « VeoVa9® », « VeoVa10® », « VeoVa11® » dérivant d'acides versatiques (Shell Chemicals). L'acide peut donc être linaire ou ramifié et peut éventuellement posséder une ou plusieurs insaturations.

Ainsi, selon un mode de réalisation de l'invention, la résine poly(vinylester) dont la Tg est inférieure à 0°C est un homopolymère choisi dans le groupe constitué par le poly(vinyl butyrate), le poly(vinyl pentanoate), le poly(vinyl hexanoate), le poly(vinyl 2-éthylhexanoate), le poly(vinyl décanoate), le poly(vinyl laurate), poly(vinyl dodécanoate), le poly(vinyl hexadecanoate), le poly(vinyl octanoate), les poly(vinyl versatate) et les mélanges de ces homopolymères.

Selon un autre mode de réalisation, la résine poly(vinylester) dont la Tg est inférieure à 0°C est un copolymère de poly(vinylester), choisi dans le groupe constitué par le poly(vinyl acétate-*co*-vinyl hexanoate), le poly(vinyl acétate-*co*-vinyl 2éthylhexanoate), le poly(vinyl acétate-*co*-vinyl versatate), le poly(vinyl acétate-*co*-vinyl laurate) et les mélanges de ces copolymères.

Selon un mode particulier de réalisation de l'invention, la résine de poly(vinylester) comporte au moins un poly(vinyl hexanoate) ou un copolymère issu d'au moins un monomère vinyl hexanoate tel que par exemple un poly(vinyl acétate-co-vinyl hexanoate).

### II.3 - Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 50 et 200 pce, plus préférentiellement entre 100 et 150 pce.

Selon un mode de réalisation préférentiel de l'invention, on utilise une charge renforçante comportant entre 50 et 150 pce, plus préférentiellement entre 50 et 120 pce de charge inorganique, particulièrement de silice, et optionnellement du noir de carbone ; le noir de carbone, lorsqu'il est présent, est utilisé plus préférentiellement à un taux inférieur à 20 pce, encore plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 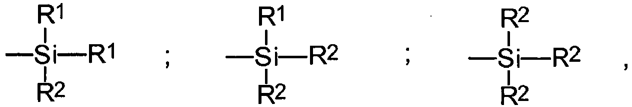 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfurés, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule VIII ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.4 - Additifs divers

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des aminés primaires, secondaires ou tertiaires, des polyorganosiloxanes hydroxylés ou hydrolysables.

Selon un mode de réalisation préférentiel, la composition de la bande de roulement du pneumatique selon l'invention comporte en outre un agent plastifiant. De préférence cet agent plastifiant est une résine hydrocarbonée solide, un plastifiant liquide, ou un mélange des deux.

Le taux d'agent plastifiant total est préférentiellement supérieur à 10 pce, plus préférentiellement compris entre 10 et 100 pce, en particulier entre 20 et 80 pce, par exemple entre 20 et 70 pce.

Selon un premier mode de réalisation préférentiel de l'invention, le plastifiant est un plastifiant liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates),* les huiles TDAE *(Treated Distillate Aromatic Extracts*), les huiles minérales, les huiles végétales, les plastifiants éthers, les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Préférentiellement, le taux de plastifiant liquide est compris entre 5 et 50 pce, plus préférentiellement entre 10 et 40 pce, encore plus préférentiellement entre 10 et 35 pce.

Selon un autre mode de réalisation préférentiel de l'invention, cet agent plastifiant est une résine hydrocarbonée thermoplastique dont la Tg est supérieure à 0°C, de préférence supérieure à + 20°C. Cette résine est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon un mode particulier de réalisation de l'invention, le taux de résine plastifiante hydrocarbonée est compris entre 5 et 50 pce, préférentiellement entre 10 et 40 pce, encore plus préférentiellement entre 10 et 35 pce.

### II.5 - Préparation des compositions de caoutchouc

Les compositions de caoutchouc peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un élastomère diénique, au cours d'une première étape (dite "non-productive"), au moins une résine poly(vinylester) et une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (l'élastomère diénique, la résine poly(vinylester), la charge renforçante) puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, la résine poly(vinylester) dans le cas d'une composition préparée conformément à l'invention, la charge renforçante (silice et noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais

Ces essais démontrent l'amélioration, en terme d'adhérence sur route mouillée, d'une bande de roulement de pneumatique selon l'invention, comparativement à une bande de roulement témoin.

Pour cela, deux compositions de caoutchouc ont été préparées comme indiqué précédemment, une conforme à l'invention (notée ci-après C.2) et une non conforme (témoin, notée ci-après C.1).

La composition C.1 est une composition témoin, à base de SBR, utilisable dans des bandes de roulement de « Pneus Verts » de véhicules tourisme.

La composition C.2 diffère de la composition témoin C.1, par l'ajout de 30 pce de résine poly(vinylester) dont la température de transition vitreuse est inférieure à 0°C, un poly(vinyl acétate-co-vinyl hexanoate). Les deux compositions se caractérisent par un taux très élevé de charge renforçante. Les compositions C.1 et C.2 comportent en outre un mélange de plastifiant comportant une résine hydrocarbonée thermoplastique (résine haute Tg C5/C9) et un plastifiant liquide (huile de tournesol).

Leurs formulations (en pce ou parties en poids pour cent parties d'élastomère), et leurs propriétés de caoutchouterie ont été résumées dans les tableaux 1 et 2.

A la lecture du tableau 2, on constate tout d'abord que la composition C.2 présente une valeur de plasticité Mooney légèrement inférieure à celle de la composition témoin C.1, ce qui témoigne d'une amélioration de la processabilité de la composition C.2 à l'état cru.

On note ensuite que la composition C.2 présente un niveau de rigidité (voir notamment dureté Shore A et MA10) équivalent à celui de la composition C.1 témoin, et un allongement à la rupture équivalent à celui de la composition C.1.

Enfin, la composition C.2 présente une valeur de tan(δ) à 0°C qui est nettement supérieure à celle de la composition témoin C.1, indicateur pour l'homme du métier d'un potentiel d'adhérence sur route mouillée des bandes de roulement de pneumatique qui est amélioré.

**Tableau 1**

| Composition n° | C.1 | C.2 |
|---|---|---|
| SBR (1) | 100 | 100 |
| Résine polyvinylester (2) | - | 30 |
| Silice (3) | 110 | 110 |
| Noir de carbone (4) | 4 | 4 |
| Agent de couplage (5) | 8.8 | 8.8 |
| Plastifiant (6) | 40 | 40 |
| Acide stéarique (7) | 2.0 | 2.0 |
| ZnO (8) | 1.8 | 1.8 |
| Soufre (9) | 1.3 | 1.3 |
| CBS (10) | 2 | 2 |
| DPG (11) | 2 | 2 |
| Agent antioxydant (12) | 2 | 2 |

| | | |
|---|---|---|
| (1) SBR solution (taux exprimé en SBR sec) ; 40% de styrène, 12 % de motifs polybutadiène 1-2 et 48% de motifs polybutadiène 1-4 (Tg = - 28°C) ; (2) Poly(vinyl acétate-*co*-vinyl hexanoate) (Tg = -25°C), 80% molaire de monomère de vinyl hexanoate et 20% molaire de monomère de vinyl acétate ; (3) Silice : « Zeosil 1165 MP » de la société Rhodia, type « HD » - (BET et CTAB : environ 160 m²/g) ; (4) Noir de carbone : N234 (grade ASTM) ; (5) agent de couplage TESTP (« Si69 » de la société Degussa) ; (6) Mélange de résine haute Tg C5/C9 (« Escorez » de la société Exxon), et d'huile de tournesol oléique («Lubrirob Tod 1880» de la société Novance) ; (7) stéarine ("Pristerene" de la société Uniquema); (8) oxyde de zinc (grade industriel - société Umicore) ; (9) soufre ; (10) N-cyclohexyl-2-benzothiazyl-sulfénamide (Santocure CBS de la société Flexsys) ; (11) Diphénylguanidine (« Perkacit DPG » de la société Flexsys) ; (12) N-1,3-diméthylbutyl-N-phénylparaphénylènediamine (Santoflex 6-PPD de la société Flexsys). | | |

**Tableau 2**

| Composition n° | C.1 | C.2 |
|---|---|---|
| Mooney | 62 | 57 |
| Shore A | 64 | 62 |
| MA10 | 5.3 | 5.1 |
| MA100 | 1.8 | 1.4 |
| AR | 584 | 577 |
| Tan(δ) à 0°C | 0.794 | 0.835 |

## Revendications

1. Pneumatique dont la bande de roulement comporte une composition de caoutchouc comprenant au moins un élastomère diénique, une résine poly(vinylester) dont la température de transition vitreuse (Tg) est inférieure à 0°C, une charge renforçante.

2. Pneumatique selon la revendication 1, dans lequel l'élastomère diénique est choisi dans le groupe constitué par les polybutadiènes (BR), les polyisoprènes (IR) de synthèse, le caoutchouc naturel (NR), les copolymères de butadiène, les copolymères d'isoprène et les mélanges de ces élastomères.

3. Pneumatique selon les revendications 1 ou 2, dans lequel le taux de résine poly(vinylester) est compris entre 5 et 50 pce.

4. Pneumatique selon la revendication 3, dans lequel le taux de résine poly(vinylester) est compris entre 10 et 40 pce.

5. Pneumatique selon l'une quelconque des revendications de 1 à 4, dans lequel la résine poly(vinylester) est un homopolymère de monomère d'ester de vinyle, de formule R-C(=O)O-CH=CH₂, où R est un radical alkyle ayant plus de 3 atomes de carbone.

6. Pneumatique selon la revendication 5, dans lequel R est un radical alkyle ayant de 4 à 20 atomes de carbone.

7. Pneumatique selon les revendications 5 ou 6, dans lequel la résine poly(vinylester) est un homopolymère choisi dans le groupe constitué par le poly(vinyl butyrate), le poly(vinyl pentanoate), le poly(vinyl hexanoate), le poly(vinyl 2-éthylhexanoate), le poly(vinyl décanoate), le poly(vinyl laurate), poly(vinyl dodécanoate), le poly(vinyl hexadecanoate), le poly(vinyl octanoate), les poly(vinyl versatate) et les mélanges de ces homopolymères.

8. Pneumatique selon l'une quelconque des revendications 1 à 4, dans lequel la résine de poly(vinylester) est un copolymère de plusieurs monomères d'ester de vinyle, de formule R-C(=O)O-CH=CH₂, dont au moins un des monomères d'ester de vinyle comporte un radical alkyle R ayant plus de 3 atomes de carbone.

9. Pneumatique selon la revendication 8, dans lequel R comporte de 4 à 20 atomes de carbone.

10. Pneumatique selon les revendications 8 ou 9, dans lequel la résine poly(vinylester) est un copolymère de poly(vinylester), choisi dans le groupe constitué par le poly(vinyl acétate-co-vinyl hexanoate), le poly(vinyl acétate-*co*-vinyl 2éthylhexanoate), le poly(vinyl acétate-*co-*vinyl versatate), le poly(vinyl acétate-*co*-vinyl laurate) et les mélanges de ces copolymères.

11. Pneumatique selon la revendication 10, dans lequel la résine de poly(vinylester) comporte au moins un poly(vinyl hexanoate) ou un copolymère issu d'au moins un monomère vinyl hexanoate.

12. Pneumatique selon la revendication 11, dans lequel la résine de poly(vinylester) comporte au moins un poly(vinyl acétate-*co*-vinyl hexanoate).

13. Pneumatique selon l'une quelconque des revendications 1 à 12, comportant en outre un agent plastifiant.

14. Pneumatique selon la revendication 13, dans lequel le taux d'agent plastifiant est supérieur à 10 pce.

15. Pneumatique selon les revendications 13 ou 14, dans lequel l'agent plastifiant est une résine hydrocarbonée thermoplastique, dont la Tg est supérieure à 0 °C.

16. Pneumatique selon la revendication 15, dans lequel la résine hydrocarbonée thermoplastique est choisi dans le groupe constitué par les résines d'homopolymères ou copolymères de cyclopentadiène ou dicyclopentadiène, les résines d'homopolymères ou copolymère terpène, les résines d'homopolymères ou copolymère terpène phénol, les résines d'homopolymères ou copolymère de coupe C5, les résines d'homopolymères ou copolymère de coupe C9, les résines d'homopolymères ou copolymères d'alpha-méthyl-styrène et les mélanges de ces résines.

17. Pneumatique selon les revendications 13 ou 14, dans lequel l'agent plastifiant est un plastifiant liquide à 20°C et dont la température de transition vitreuse (Tg) est inférieure à -20°C.

18. Pneumatique selon la revendication 17, dans lequel le plastifiant liquide est choisi dans le groupe constitué par les huiles naphténiques, les huiles paraffiniques, les huiles MES, les huiles TDAE, les plastifiants esters, les plastifiants éthers, les plastifiants phosphates, les plastifiants sulfonates et les mélanges de ces composés.

19. Pneumatique selon les revendications 13 ou 14, comportant une résine hydrocarbonée thermoplastique selon les revendications 15 ou 16 et un plastifiant liquide selon les revendications 17 ou 18.

20. Pneumatique selon l'une quelconque des revendications 1 à 19, dans lequel la charge renforçante comporte du noir de carbone, de la silice, ou du noir de carbone et de la silice.

## Patentansprüche

1. Luftreifen, dessen Laufstreifen eine Kautschukzusammensetzung aufweist, welche wenigstens ein Dienelastomer, ein Poly(vinylester)harz, dessen Glasübergangstemperatur (Tg) niedriger als 0 °C ist, und einen verstärkenden Füllstoff umfasst.

2. Luftreifen nach Anspruch 1, wobei das Dienelastomer aus der Gruppe ausgewählt ist, die aus Polybutadienen (BR), Synthese-Polyisoprenen (IR), Naturkautschuk (NR), Butadien-Copolymeren, Isopren-Copolymeren und Mischungen dieser Elastomere besteht.

3. Luftreifen nach Anspruch 1 oder 2, wobei der Anteil an Poly(vinylester)harz zwischen 5 und 50 pce liegt.

4. Luftreifen nach Anspruch 3, wobei der Anteil an Poly(vinylester)harz zwischen 10 und 40 pce liegt.

5. Luftreifen nach einem der Ansprüche 1 bis 4, wobei das Poly(vinylester)harz ein Homopolymer eines Vinylestermonomers mit der Formel R-C(=O)O-CH=CH₂ ist, wobei R ein Alkylradikal mit mehr als 3 Kohlenstoffatomen ist.

6. Luftreifen nach Anspruch 5, wobei R ein Alkylradikal mit 4 bis 20 Kohlenstoffatomen ist.

7. Luftreifen nach Anspruch 5 oder 6, wobei das Poly(vinylester)harz ein Homopolymer ist, das aus der Gruppe ausgewählt ist, die aus Poly(vinylbutyrat), Poly(vinylpentanoat), Poly(vinylhexanoat), Poly(vinyl-2-ethylhexanoat), Poly(vinyldecanoat), Poly(vinyllaurat), Poly(vinyldodecanoat), Poly(vinylhexadecanoat), Poly(vinyloctanoat), Poly(vinylversatat) und den Mischungen dieser Homopolymere besteht.

8. Luftreifen nach einem der Ansprüche 1 bis 4, wobei das Poly(vinylester)harz ein Copolymer mehrerer Vinylestermonomere mit der Formel R-C(=O)O-CH=CH₂ ist, wobei mindestens eines der Vinylestermonomere ein Alkylradikal R mit mehr als 3 Kohlenstoffatomen aufweist.

9. Luftreifen nach Anspruch 8, wobei R 4 bis 20 Kohlenstoffatome aufweist.

10. Luftreifen nach Anspruch 8 oder 9, wobei das Poly(vinylester)harz ein Poly(vinylester)copolymer ist, das aus der Gruppe ausgewählt ist, die aus Poly(vinylacetat-co-vinylhexanoat), Poly(vinylacetat-co-vinyl-2-ethylhexanoat), Poly(vinylacetat-co-vinylversatat), Poly(vinylacetat-co-vinyllaurat) und den Mischungen dieser Copolymere besteht.

11. Luftreifen nach Anspruch 10, wobei das Poly(vinylester)harz wenigstens ein Poly(vinylhexanoat) oder ein Copolymer, das aus mindestens einem Vinylhexanoatmonomer hervorgegangen ist, aufweist.

12. Luftreifen nach Anspruch 11, wobei das Poly(vinylester)harz mindestens ein Poly(vinylacetat-co-vinylhexanoat) umfasst.

13. Luftreifen nach einem der Ansprüche 1 bis 12, welcher außerdem einen Weichmacher umfasst.

14. Luftreifen nach Anspruch 13, wobei der Anteil des Weichmachers höher als 10 pce ist.

15. Luftreifen nach Anspruch 13 oder 14, wobei der Weichmacher ein thermoplastisches Kohlenwasserstoffharz ist, dessen Tg höher als 0 °C ist.

16. Luftreifen nach Anspruch 15, wobei das thermoplastische Kohlenwasserstoffharz aus der Gruppe ausgewählt ist, die aus Cyclopentadien- oder Dicyclopentadien-Homopolymer- oder -Copolymerharzen, Terpen-Homopolymer- oder -Copolymerharzen, Terpenphenol-Homopolymer- oder -Copolymerharzen, Homopolymer- oder Copolymerharzen eines C5-Schnittes, Homopolymer- oder Copolymerharzen eines C9-Schnittes, Alphamethylstyrol-Homopolymer- oder Copolymerharzen und den Mischungen dieser Harze besteht.

17. Luftreifen nach Anspruch 13 oder 14, wobei der Weichmacher ein bei 20 °C flüssiger Weichmacher ist, dessen Glasübergangstemperatur (Tg) niedriger als -20 °C ist.

18. Luftreifen nach Anspruch 17, wobei der flüssige Weichmacher aus der Gruppe ausgewählt ist, die aus naphthenischen Ölen, Paraffinölen, MES-Ölen, TDAE-Ölen, Ester-Weichmachern, Ether-Weichmachern, Phosphat-Weichmachern, Sulfonat-Weichmachern und den Mischungen dieser Verbindungen besteht.

19. Luftreifen nach Anspruch 13 oder 14, welcher ein thermoplastisches Kohlenwasserstoffharz nach den Ansprüchen 15 oder 16 und einen flüssigen Weichmacher nach den Ansprüchen 17 oder 18 aufweist.

20. Luftreifen nach einem der Ansprüche 1 bis 19, wobei der verstärkende Füllstoff Ruß, Siliciumdioxid oder Ruß und Siliciumdioxid beinhaltet.

## Claims

1. Tyre, the tread of which comprises a rubber composition comprising at least a diene elastomer, a poly(vinyl ester) resin, the glass transition temperature (Tg) of which is less than 0°C, and a reinforcing filler.

2. Tyre according to Claim 1, in which the diene elastomer is chosen from the group consisting of polybutadienes (BR), synthetic polyisoprenes (IR), natural rubber (NR), butadiene copolymers, isoprene copolymers and the mixtures of these elastomers.

3. Tyre according to Claim 1 or Claim 2, in which the content of poly(vinyl ester) resin is between 5 and 50 phr.

4. Tyre according to Claim 3, in which the content of poly(vinyl ester) resin is between 10 and 40 phr.

5. Tyre according to any one of Claims 1 to 4, in which the poly(vinyl ester) resin is a homopolymer of a vinyl ester monomer of formula R-C(=O)O-CH=CH₂, where R is an alkyl radical having more than 3 carbon atoms.

6. Tyre according to Claim 5, in which R is an alkyl radical having from 4 to 20 carbon atoms.

7. Tyre according to Claim 5 or Claim 6, in which the poly(vinyl ester) resin is a homopolymer chosen from the group consisting of poly(vinyl butyrate), poly(vinyl pentanoate), poly(vinyl hexanoate), poly(vinyl 2-ethylhexanoate), poly(vinyl decanoate), poly(vinyl laurate), poly(vinyl dodecanoate), poly(vinyl hexadecanoate), poly(vinyl octanoate), poly(vinyl versatate)s and the mixtures of these homopolymers.

8. Tyre according to any one of Claims 1 to 4, in which the poly(vinyl ester) resin is a copolymer of several vinyl ester monomers of formula R-C(=O)O-CH=CH₂, at least one of the vinyl ester monomers of which comprises an alkyl radical R having more than 3 carbon atoms.

9. Tyre according to Claim 8, in which R comprises from 4 to 20 carbon atoms.

10. Tyre according to Claim 8 or Claim 9, in which the poly(vinyl ester) resin is a poly(vinyl ester) copolymer, chosen from the group consisting of poly(vinyl acetate-*co*-vinyl hexanoate), poly(vinyl acetate-*co*-vinyl 2-ethylhexanoate), poly(vinyl acetate-*co*-vinyl versatate), poly(vinyl acetate-*co*-vinyl laurate) and the mixtures of these copolymers.

11. Tyre according to Claim 10, in which the poly(vinyl ester) resin comprises at least a poly(vinyl hexanoate) or a copolymer resulting from at least a vinyl hexanoate monomer.

12. Tyre according to Claim 11, in which the poly(vinyl ester) resin comprises at least a poly(vinyl acetate-*co*-vinyl hexanoate).

13. Tyre according to any one of Claims 1 to 12, additionally comprising a plasticizing agent.

14. Tyre according to Claim 13, in which the content of plasticizing agent is greater than 10 phr.

15. Tyre according to Claim 13 or Claim 14, in which the plasticizing agent is a thermoplastic hydrocarbon resin, the Tg of which is greater than 0°C.

16. Tyre according to Claim 15, in which the thermoplastic hydrocarbon resin is chosen from the group consisting of cyclopentadiene or dicyclopentadiene homopolymer or copolymer resins, terpene homopolymer or copolymer resins, terpene phenol homopolymer or copolymer resins, C₅ fraction homopolymer or copolymer resins, C₉ fraction homopolymer or copolymer resins, α-methylstyrene homopolymer or copolymer resins and the mixtures of these resins.

17. Tyre according to Claim 13 or Claim 14, in which the plasticizing agent is a liquid plasticizer at 20°C, the glass transition temperature (Tg) of which is less than -20°C.

18. Tyre according to Claim 17, in which the liquid plasticizer is chosen from the group consisting of naphthenic oils, paraffinic oils, MES oils, TDAE oils, ester plasticizers, ether plasticizers, phosphate plasticizers, sulphonate plasticizers and the mixtures of these compounds.

19. Tyre according to Claim 13 or Claim 14, comprising a thermoplastic hydrocarbon resin according to Claim 15 or Claim 16 and a liquid plasticizer according to Claim 17 or Claim 18.

20. Tyre according to any one of Claims 1 to 19, in which the reinforcing filler comprises carbon black, silica, or carbon black and silica.
